**Europäisches Patentamt**

**European Patent Office**

**Office européen des brevets**

(11) Veröffentlichungsnummer: **0 020 854**
**A1**

(12) # EUROPÄISCHE PATENTANMELDUNG

(21) Anmeldenummer: **80101025.7**

(51) Int. Cl.³: **F 16 C 33/10**

(22) Anmeldetag: **01.03.80**

(30) Priorität: **12.06.79 DE 7916883 U**

(71) Anmelder: **Karl Rayer GmbH & Co. KG, Ulmer Strasse 46, D-7300 Esslingen a. N. (DE)**

(43) Veröffentlichungstag der Anmeldung: **07.01.81 Patentblatt 81/1**

(72) Erfinder: **Bayer, Robert, Im Holzberg 25, D-7300 Esslingen (DE)**

(84) Benannte Vertragsstaaten: **AT BE CH FR GB IT LU NL SE**

(74) Vertreter: **Patentanwälte Dipl.-Ing. W. Scherrmann Dr.-Ing. R. Rüger, Webergasse 3, D-7300 Esslingen (DE)**

(54) **Wellenzapfenlager.**

(57) Ein Wellenzapfenlager enthält einen in eine Blechkapsel (2) eingepreßten Lagerring (1) aus Sinterbronze. Dahinter im geschlossenen Ende der Kapsel (2) ist ein zylindrischer Ölvorratskörper (5) aus Sintereisen angeordnet, durch den das Lager selbsttätig geschmiert wird.

- 1 -

KARL RAYER GmbH & Co. KG, Ulmer Straße 46,
D-7300 Esslingen a.N.


Wellenzapfenlager


Die Erfindung betrifft ein Wellenzapfenlager aus einem
in eine Blechkapsel eingepreßten Lagerring aus Sinterbronze und einem dahinter im geschlossenen Ende der
Kapsel angeordneten zylindrischen Ölvorratskörper.

Derartige Lagerringe aus Sinterbronze weisen bekanntlich eine hohe Temperaturbeständigkeit auf. Damit beim
Betrieb des Lagers eine automatische Schmierung zustandekommt, hat man bei den bekannten Wellenzapfenlagern
der vorgenannten Art hinter dem Lagerring im geschlossenen Ende der Kapsel einen Ölvorratskörper aus
Filz angeordnet, aus welchem dem Lagerring jeweils
Schmiermittel zugeführt wird. Derartige Filzkörper
haben jedoch den Nachteil, daß sie in absehbarer
Zeit einem Verschleiß unterliegen und daß eine gleichmäßige Schmiermittelversorgung des Lagerringes durch
sie nicht gewährleistet ist. Die von ihnen entwickelten Fusseln erschweren den Schmiermittelkreislauf und
setzen sich unter Umständen störend in der Lagerung ab.

Ziel der Erfindung ist es, ein Wellenzapfenlager der
eingangs genannten Art zu schaffen, das eine gleichmäßige Schmiermittelversorgung sicherstellt und bei dem eine störende Fusselbildung entfällt. Gemäß der Erfindung besteht der Ölvorratskörper des Wellenzapfenlagers aus Sintereisen. Dieses ist vorzugsweise ein Sintereisen von 28% bis 32% Porosität. Dadurch, daß der Ölvorratskörper numehr aus einem ähnlichen Material besteht wie der Lagerring, wird dieser gleichmäßig mit Schmiermittel versorgt, weil der Schmiermittelkreislauf zwischen dem Ölvorratskörper und dem Lagerring gleichförmig vor sich geht.

In der Zeichnung ist ein Ausführungsbeispiel des Gegenstandes der Erfindung dargestellt. Es zeigen:

Fig. 1   ein Wellenzapfenlager gemäß der Erfindung in einem axialen Schnitt und

Fig. 2   das Wellenzapfenlager in einer Vorderansicht.

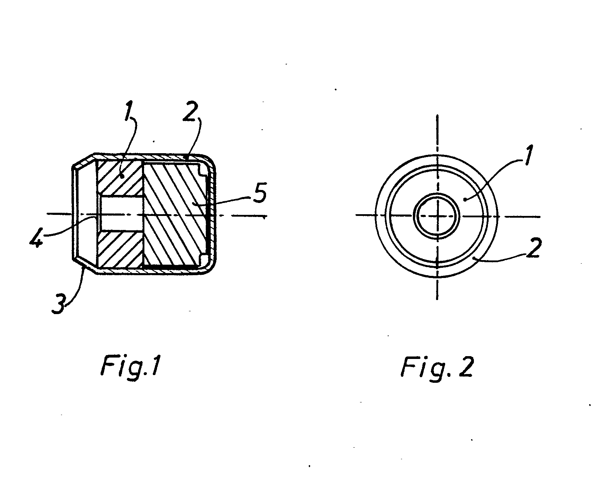

In Fig. 1 ist der Lagerring 1 aus Sinterbronze in eine Kapsel 2 aus Aluminium eingepreßt. Am vorderen Ende weist die Kapsel 2 einen offenen, kurzen konischen Teil 3 auf. Durch diesen greift der nicht dargestellte Wellenzapfen in die Lageröffnung 4 ein.

Hinter dem Lagerring 1 ist in der Kapsel 2 ein Ölvorratskörper 5 aus Sintereisen von 28% bis 32% Porosität angeordnet. An diesem Ende ist die Kapsel 2 vollständig geschlossen. Der Durchmesser des Ölvorratskörpers 5 ist derart gewählt, daß er beim Zusammenpressen der Kapsel von dieser nicht erfaßt wird, sondern sich auch nach dem Zusammenpressen noch mit einem losen Sitz in der Kapsel befindet, wodurch die Herstellung des Lagers vereinfacht wird.

- 1 -                              0020854

Patentansprüche:

1. Wellenzapfenlager aus einem in eine Blechkapsel (2) eingepreßten Lagerring (1) aus Sinterbronze und einem dahinter im geschlossenen Ende der Kapsel (2) angeordneten zylindrischen Ölvorratskörper (5), dadurch gekennzeichnet, daß der Ölvorratskörper (5)
   aus Sintereisen besteht.

2. Wellenzapfenlager nach Anspruch 1, dadurch
   gekennzeichnet, daß der Ölvorratskörper (5)
   aus einem Sintereisen von 28% bis 32% Porosität besteht.

3. Wellenzapfenlager nach Anspruch 1, dadurch
   gekennzeichnet, daß der Ölvorratskörper (5)
   mit einem losen Sitz in der Kapsel (2) angeordnet ist.

Fig.1

Fig. 2

Europäisches
Patentamt

**EUROPÄISCHER RECHERCHENBERICHT**

0020854

Nummer der Anmeldung

EP 80 10 1025.7

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| | DE - C - 818 443 (AKTIENGESELLSCHAFT FÜR BERGBAU- UND HÜTTENBEDARF) <br> * Anspruch 1; Fig. 1 und 2 * <br> --- | 1 | F 16 C 33/10 |
| | DE - B - H 4671 XII/47b (HAGAN-WERK F. RUMMEL) <br> * Ansprüche 1 und 4; Fig. 2 * <br> -- | 1 | |
| | DE - B - 1 285 793 (METALLURGIE FRANÇAISE DES POUDRES METAFRAN) <br> * Spalte 2, Zeilen 60 bis 64 * <br> -- | 2 | RECHERCHIERTE SACHGEBIETE (Int. Cl.) <br><br> F 16 C 33/00 |
| | DE - U - 1 982 161 (LANDIS & GYR GMBH) <br> * Seite 2, Zeilen 11 bis 26; Fig. * <br> -- | 1,3 | |
| | US - A - 3 298 762 (R.O. PECK et al.) <br> * Fig. 7 * <br> -- | 3 | |
| A | DE - A - 2 124 182 (VEB ELEKTRO- GERÄTEWERK SUHL) <br> * ganzes Dokument * <br> --- | | |
| A | DE - U - 7 046 956 (SIEMENS AG) <br> * ganzes Dokument * <br> -- <br> ./.. | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 28-08-1980 | MASSALSKI |

EPA form 1503.1  06.78

**Europäisches Patentamt**

**EUROPÄISCHER RECHERCHENBERICHT**

0020854

Nummer der Anmeldung

EP 80 10 1025.7

– Seite 2 –

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US – A – 2 665 960 (A.L. CAUSLEY) <br> * ganzes Dokument * <br> –– | |
| A | VDI–Z, Band 116, Nr. 4, März 1974, Düsseldorf <br> H. DETTER "Betriebsverhalten, Eigenschaften und Berechnung von Sinterlagern für die Feinmechanik" <br> Seiten 305 bis 310 <br> * ganzes Dokument * <br> –––– | |

**KLASSIFIKATION DER ANMELDUNG (Int.Cl.³)**

**RECHERCHIERTE SACHGEBIETE (Int. Cl.³)**